# EUROPEAN PATENT APPLICATION

(11) **EP 4 717 541 A1**
(43) Date of publication of application: **01.04.2026**
(21) Application number: 25805602.7
(22) Date of filing: 18.07.2025
(51) Int. Cl.: B60W 30/095, B60W 30/09, B60W 50/14, G08G 1/16

(54) **VEHICLE COLLISION AVOIDANCE METHOD AND APPARATUS FOR VEHICLE, AND AUTOMOBILE AND STORAGE MEDIUM**

(30) Priority: 31.07.2024 CN 202411041812
(71) Applicant: Chery Automobile Co., Ltd., Wuhu, Anhui 241006 (CN)
(72) Inventor: WANG, Jinlei, Anhui 241006 (CN); KOU, Qinglin, Anhui 241006 (CN); LI, Penglong, Anhui 241006 (CN); CHEN, Changhong, Anhui 241006 (CN)
(74) Representative: dompatent
(86) International application number: PCT/CN2025/109292
(87) International publication number: WO 2026/026574

(57) **Abstract**

The present disclosure provides a method and an apparatus for preventing an entire vehicle collision for a vehicle, a vehicle, and a storage medium. The method includes: determining whether a preceding vehicle of a current vehicle performs a deceleration operation; calculating, in a case that the preceding vehicle performs the deceleration operation, a collision risk coefficient between the current vehicle and the preceding vehicle; determining whether the collision risk coefficient is greater than a predetermined first threshold; calculating, in the case that the collision risk coefficient is greater than the predetermined first threshold, forward-backward collision risk coefficients of the current vehicle respectively under a first deceleration strategy, a second deceleration strategy, and a third deceleration strategy; and comparing the forward-backward collision risk coefficients with a predetermined second threshold, determining a target deceleration strategy based on a comparison result, and controlling the current vehicle to execute the target deceleration strategy.

## Description

This application claims priority to Chinese Patent Application No. 202411041812.0, filed on July 31, 2024, and entitled "WHOLE VEHICLE ANTI-COLLISION METHOD AND DEVICE, AUTOMOBILE AND STORAGE MEDIUM," the disclosure of which is herein incorporated by reference in its entirety.

### TECHNICAL FIELD

The present disclosure relates to the field of vehicle engineering technologies, and in particular, relates to a method and an apparatus for preventing an entire vehicle collision for a vehicle, a vehicle, and a storage medium.

### BACKGROUND

The statements in this section are provided merely as background information relevant to the present disclosure and do not necessarily constitute prior art.

With the advancement of autonomous driving technologies, autonomous driving functions are being introduced into an increasingly wide range of scenarios. Safety and comfort are primary objectives that need to be ensured in the design of autonomous driving functions, and a balance between the two is desired by users.

### SUMMARY

The present disclosure provides a method and an apparatus for preventing an entire vehicle collision for a vehicle, a vehicle, and a storage medium. The technical solutions are as follows.

In one aspect, a method for preventing an entire vehicle collision for a vehicle is provided. The method includes:
determining whether a preceding vehicle of a current vehicle performs a deceleration operation;
calculating, in a case that the preceding vehicle performs the deceleration operation, a collision risk coefficient between the current vehicle and the preceding vehicle;
determining whether the collision risk coefficient is greater than a predetermined first threshold;
calculating, in a case that the collision risk coefficient is greater than the predetermined first threshold, forward-backward collision risk coefficients of the current vehicle respectively under a first deceleration strategy, a second deceleration strategy, and a third deceleration strategy, wherein a deceleration value of the first deceleration strategy is less than a deceleration value of the second deceleration strategy, and the deceleration value of the second deceleration strategy is less than a deceleration value of the third deceleration strategy; and
comparing the forward-backward collision risk coefficients with a predetermined second threshold, determining a target deceleration strategy based on a comparison result, and controlling the current vehicle to execute the target deceleration strategy, wherein the target deceleration strategy is one of the first deceleration strategy, the second deceleration strategy, and the third deceleration strategy.

In some embodiments, comparing the forward-backward collision risk coefficients with the predetermined second threshold and determining the target deceleration strategy based on the comparison result includes:
determining, in a case that the forward-backward collision risk coefficients respectively corresponding to the first deceleration strategy, the second deceleration strategy, and the third deceleration strategy are all greater than the predetermined second threshold, the third deceleration strategy as the target deceleration strategy.

In some embodiments, comparing the forward-backward collision risk coefficients with the predetermined second threshold and determining the target deceleration strategy based on the comparison result includes:
determining, in a case that at least one of the forward-backward collision risk coefficients respectively corresponding to the first deceleration strategy, the second deceleration strategy, and the third deceleration strategy is less than or equal to the predetermined second threshold, the target deceleration strategy in a priority order of the first deceleration strategy, the second deceleration strategy, and the third deceleration strategy.

In some embodiments, determining the target deceleration strategy in the priority order of the first deceleration strategy, the second deceleration strategy, and the third deceleration strategy, includes:
determining, in a case that the forward-backward collision risk coefficients respectively corresponding to the first deceleration strategy, the second deceleration strategy, and the third deceleration strategy are all less than the predetermined second threshold, the first deceleration strategy as the target deceleration strategy.

In some embodiments, determining the target deceleration strategy in the priority order of the first deceleration strategy, the second deceleration strategy, and the third deceleration strategy further includes:
determining, in a case that a forward-backward collision risk coefficient corresponding to the first deceleration strategy is greater than the predetermined second threshold and forward-backward collision risk coefficients respectively corresponding to the second deceleration strategy and the third deceleration strategy are less than or equal to the predetermined second threshold, the second deceleration strategy as the target deceleration strategy.

In some embodiments, determining the target deceleration strategy in the priority order of the first deceleration strategy, the second deceleration strategy, and the third deceleration strategy further includes:
determining, in a case that forward-backward collision risk coefficients respectively corresponding to the first deceleration strategy and the second deceleration strategy are greater than the predetermined second threshold and a forward-backward collision risk coefficient corresponding to the third deceleration strategy is less than or equal to the predetermined second threshold, the third deceleration strategy as the target deceleration strategy.

In some embodiments, the method further includes: determining, in a case that the preceding vehicle does not perform the deceleration operation, but a second vehicle ahead performs the deceleration operation, whether a deceleration of the second vehicle ahead is greater than a predetermined deceleration threshold; keeping, in a case that the deceleration of the second vehicle ahead is less than or equal to the predetermined deceleration threshold, the current vehicle in a current driving condition; and executing, by the current vehicle, in a case that the deceleration of the second vehicle ahead is greater than the predetermined deceleration threshold, the first deceleration strategy.

In another aspect, an apparatus for preventing an entire vehicle collision for a vehicle is provided. The apparatus includes:
a first determining module, configured to determine whether a preceding vehicle of a current vehicle performs a deceleration operation;
a first calculating module, configured to calculate, in a case that the preceding vehicle performs the deceleration operation, a collision risk coefficient between the current vehicle and the preceding vehicle;
a second determining module, configured to determine whether the collision risk coefficient is greater than a predetermined first threshold;
a second calculating module, configured to calculate, in a case that the collision risk coefficient is greater than the predetermined first threshold, forward-backward collision risk coefficients of the current vehicle respectively under a first deceleration strategy, a second deceleration strategy, and a third deceleration strategy, wherein a deceleration value of the first deceleration strategy is less than a deceleration value of the second deceleration strategy, and the deceleration value of the second deceleration strategy is less than a deceleration value of the third deceleration strategy; and
an executing module, configured to compare the forward-backward collision risk coefficients with a predetermined second threshold, determine a target deceleration strategy based on a comparison result, and control the current vehicle to execute the target deceleration strategy, wherein the target deceleration strategy is one of the first deceleration strategy, the second deceleration strategy, and the third deceleration strategy.

In another aspect, a vehicle is provided. The vehicle includes a memory and one or more processors. The memory is configured to store one or more computer programs, and the one or more processors are configured to execute the one or more computer programs stored in the memory to perform the processes of the method for preventing an entire vehicle collision for a vehicle described above.

In another aspect, a computer-readable storage medium is provided. The storage medium stores one or more computer programs, and the one or more computer programs, when executed by one or more processors, cause the one or more processors to perform the processes of the method for preventing an entire vehicle collision for a vehicle described above.

The advantages of various aspects of the present disclosure are partially provided in the following description and partially becoming apparent from the following description or apprehensible through the practice of the present disclosure.

### BRIEF DESCRIPTION OF DRAWINGS

The accompanying drawings constituting a part of the present disclosure are intended to help further understanding of the present disclosure. Exemplary embodiments of the present disclosure and illustrations thereof are used to explain the present disclosure and do not constitute any undue limitation to the present disclosure.
FIG. 1 is a flowchart of a method for preventing an entire vehicle collision for a vehicle according to some embodiments of the present disclosure;
FIG. 2 is a flowchart of another method for preventing an entire vehicle collision for a vehicle according to some embodiments of the present disclosure;
FIG. 3 is a flowchart of yet another method for preventing an entire vehicle collision for a vehicle according to some embodiments of the present disclosure;
FIG. 4 is a schematic structural diagram of an apparatus for preventing an entire vehicle collision for a vehicle according to some embodiments of the present disclosure; and
FIG. 5 is a schematic structural diagram of a vehicle according to some embodiments of the present disclosure.

### DETAILED DESCRIPTION

It should be noted that the following detailed descriptions are exemplary and intended to provide further explanation of the present disclosure. Unless otherwise indicated, all technical and scientific terms used herein have the same meanings as commonly understood by those of ordinary skill in the art to which the present disclosure belongs.

It should be noted that the terms used herein are merely for the purpose of describing specific embodiments and are not intended to limit the exemplary embodiments according to the present disclosure.

The embodiments of the present disclosure and features in the embodiments are combined with each other without conflicts in some embodiments.

Before explaining the method for preventing an entire vehicle collision for a vehicle according to the embodiments of the present disclosure in detail, the application scenario, system architecture, and implementation environment of the embodiments of the present disclosure are first described.

First, the application scenario involved in the embodiments of the present disclosure is described.

With the advancement of autonomous driving technologies, autonomous driving functions are being introduced into an increasingly wide range of scenarios. The first thing that needs to be ensured in the design of autonomous driving functions is driving safety and comfort, and a balance between the two is desired by users. Currently, a typical safety function autonomous emergency braking (AEB) strategy and a comfort driving assistance strategy are separated. In the case that a vehicle executes a risk collision avoidance strategy, a large deceleration often results in a bad experience for the user. Even in some cases, the AEB braking is triggered too late and the deceleration is too large, resulting in a rear-end collision with a followed vehicle and causing secondary injuries, which cannot meet the user's expectations.

Based on such an application scenario, the embodiments of the present disclosure provide a method for preventing a collision for an entire vehicle. The method is used to reduce collision risks and ensure both safety and comfort at the same time. The method ensures the driving safety, reduces the possibility of a rear-end accident, and at the same time, considers requirements for comfort of users.

Next, the system architecture of the embodiments of the present disclosure is described.

The embodiments of the present disclosure provide a system for preventing an entire vehicle collision for a vehicle. The system architecture includes a microwave radar, a central gateway, an audio control module (radio receive module, RRM), a combination instrument system (interference control monitor, ICM), a body control module (BCM), an emergency brake light, and the like. In some embodiments, the microwave radar is connected to the central gateway, the central gateway is separately connected to the RRM, the ICM, and the BCM, and the BCM is connected to the emergency brake light.

On the basis of the above system architecture, the solutions of the present disclosure analyze the surrounding environment of the current vehicle by means of bird's eye view (BEV) perception technologies.

BEV perception technologies are mainly classified into three types based on types of input sensors: a multi-view camera-based camera perception technology (camera), a lidar-based perception technology (lidar), and a millimeter-wave radar-based perception technology (radar). A BEV perception technology based on multi-sensor fusion (BEV fusion) is a technology that takes data from a plurality of sensors as an input, such as image data acquired by a camera and point cloud data acquired by a lidar, and performs information fusion on different modalities through the design of a fusion mechanism, such that more abundant BEV features are acquired to improve the precision and robustness of BEV perception.

As an example, in the present disclosure, a deceleration state of a preceding vehicle of a current vehicle and a deceleration state of a second vehicle ahead of the current vehicle are acquired via the BEV perception technology.

Those skilled in the art should understand that the above system architecture is only an example, and other existing or future modules or elements applicable to the present disclosure should also fall within the protection scope of the present disclosure and are hereby incorporated by reference.

The following explains in detail a method for preventing a collision for a vehicle according to the embodiments of the present disclosure with reference to the accompanying drawings.

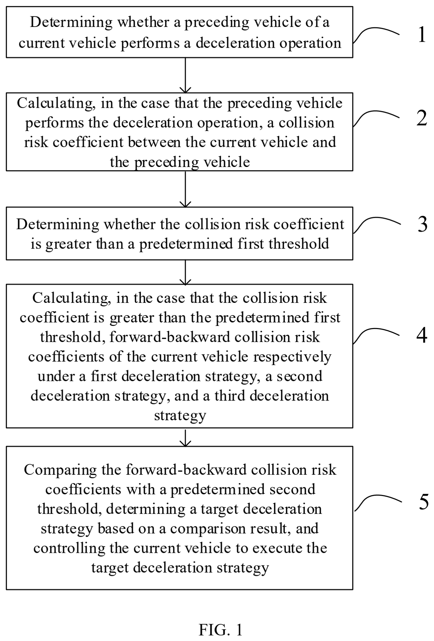

FIG. 1 is a flowchart of a method for preventing an entire vehicle collision for a vehicle according to some embodiments of the present disclosure. The method is applicable to a vehicle. In some embodiments, the method is performed by an electronic control unit (ECU) of the vehicle. Referring to FIG. 1, the method includes the following processes.

In process 1, it is determined whether a preceding vehicle of a current vehicle performs a deceleration operation.

In process 2, in the case that the preceding vehicle performs the deceleration operation, a collision risk coefficient between the current vehicle and the preceding vehicle is calculated.

In process 3, it is determined whether the collision risk coefficient is greater than a predetermined first threshold.

In process 4, in the case that the collision risk coefficient is greater than the predetermined first threshold, forward-backward collision risk coefficients of the current vehicle respectively under a first deceleration strategy, a second deceleration strategy, and a third deceleration strategy are calculated, wherein a deceleration value of the first deceleration strategy is less than a deceleration value of the second deceleration strategy, and the deceleration value of the second deceleration strategy is less than a deceleration value of the third deceleration strategy.

In process 5, the forward-backward collision risk coefficients are compared with a predetermined second threshold, and the current vehicle executes a corresponding deceleration strategy based on a comparison result. That is, in some embodiments, in process 5, the forward-backward collision risk coefficients are compared with the predetermined second threshold, a target deceleration strategy is determined based on the comparison result, and the current vehicle is controlled to execute the target deceleration strategy. The target deceleration strategy is one of the first deceleration strategy, the second deceleration strategy, and the third deceleration strategy.

In the present disclosure, it is determined whether the preceding vehicle of the current vehicle performs a deceleration operation. In the case that the preceding vehicle performs the deceleration operation, it is determined whether the current collision risk coefficient is greater than the predetermined first threshold. In the case that the current collision risk coefficient is greater than the predetermined first threshold, the forward-backward collision risk coefficients respectively under the first deceleration strategy, the second deceleration strategy, and the third deceleration strategy are calculated, and the corresponding deceleration strategy is executed based on the comparison between the calculated forward-backward collision risk coefficients and the predetermined second threshold. Therefore, the driving safety is ensured, the possibility of a rear-end accident is decreased, and at the same time, the user's requirement for comfort is satisfied.

In some embodiments, comparing the forward-backward collision risk coefficients with the predetermined second threshold and executing, by the current vehicle, the corresponding deceleration strategy based on the comparison result, includes:
executing, by the current vehicle, in the case that the forward-backward collision risk coefficients respectively corresponding to the first deceleration strategy, the second deceleration strategy, and the third deceleration strategy are all greater than the predetermined second threshold, the third deceleration strategy.

That is, comparing the forward-backward collision risk coefficients with the predetermined second threshold and determining the target deceleration strategy based on the comparison result, includes:
determining, in the case that the forward-backward collision risk coefficients respectively corresponding to the first deceleration strategy, the second deceleration strategy, and the third deceleration strategy are all greater than the predetermined second threshold, the third deceleration strategy as the target deceleration strategy.

In some embodiments, comparing the forward-backward collision risk coefficients with the predetermined second threshold and executing, by the current vehicle, the corresponding deceleration strategy based on the comparison result, further includes:
selecting, in the case that at least one coefficient of the forward-backward collision risk coefficients respectively corresponding to the first deceleration strategy, the second deceleration strategy, and the third deceleration strategy is less than or equal to the predetermined second threshold, a strategy executed by the current vehicle in the priority order of the first deceleration strategy, the second deceleration strategy, and the third deceleration strategy.

That is, comparing the forward-backward collision risk coefficients with the predetermined second threshold and determining the target deceleration strategy based on the comparison result, includes:
determining, in the case that at least one of the forward-backward collision risk coefficients respectively corresponding to the first deceleration strategy, the second deceleration strategy, and the third deceleration strategy is less than or equal to the predetermined second threshold, the target deceleration strategy in the priority order of the first deceleration strategy, the second deceleration strategy, and the third deceleration strategy.

In some embodiments, selecting the strategy executed by the current vehicle in the priority order of the first deceleration strategy, the second deceleration strategy, and the third deceleration strategy, includes:
executing, by the current vehicle, in the case that the forward-backward collision risk coefficients respectively corresponding to the first deceleration strategy, the second deceleration strategy, and the third deceleration strategy are all less than the predetermined second threshold, the first deceleration strategy.

That is, determining the target deceleration strategy in the priority order of the first deceleration strategy, the second deceleration strategy, and the third deceleration strategy, includes:
determining, in the case that the forward-backward collision risk coefficients respectively corresponding to the first deceleration strategy, the second deceleration strategy, and the third deceleration strategy are all less than the predetermined second threshold, the first deceleration strategy as the target deceleration strategy.

In some embodiments, selecting the strategy executed by the current vehicle in the priority order of the first deceleration strategy, the second deceleration strategy, and the third deceleration strategy, further includes:
executing, by the current vehicle, in the case that a forward-backward collision risk coefficient corresponding to the first deceleration strategy is greater than the predetermined second threshold and forward-backward collision risk coefficients respectively corresponding to the second deceleration strategy and the third deceleration strategy are both less than or equal to the predetermined second threshold, the second deceleration strategy.

That is, determining the target deceleration strategy in the priority order of the first deceleration strategy, the second deceleration strategy, and the third deceleration strategy, further includes:
determining, in the case that the forward-backward collision risk coefficient corresponding to the first deceleration strategy is greater than the predetermined second threshold and forward-backward collision risk coefficients respectively corresponding to the second deceleration strategy and the third deceleration strategy are both less than or equal to the predetermined second threshold, the second deceleration strategy as the target deceleration strategy.

In some embodiments, selecting the strategy executed by the current vehicle in the priority order of the first deceleration strategy, the second deceleration strategy, and the third deceleration strategy, further includes:
executing, by the current vehicle, in the case that forward-backward collision risk coefficients respectively corresponding to the first deceleration strategy and the second deceleration strategy are greater than the predetermined second threshold and a forward-backward collision risk coefficient corresponding to the third deceleration strategy is less than or equal to the predetermined second threshold, the third deceleration strategy.

That is, determining the target deceleration strategy in the priority order of the first deceleration strategy, the second deceleration strategy, and the third deceleration strategy, further includes:
determining, in the case that forward-backward collision risk coefficients respectively corresponding to the first deceleration strategy and the second deceleration strategy are greater than the predetermined second threshold and a forward-backward collision risk coefficient corresponding to the third deceleration strategy is less than or equal to the predetermined second threshold, the third deceleration strategy as the target deceleration strategy.

In some embodiments, the method further includes: determining, in the case that the preceding vehicle does not perform the deceleration operation, but the second vehicle ahead performs the deceleration operation, whether the deceleration of the second vehicle ahead is greater than a predetermined deceleration threshold; keeping, in the case that the deceleration of the second vehicle ahead is less than or equal to the predetermined deceleration threshold, the current vehicle in the current driving condition; and executing, by the current vehicle, in the case that the deceleration of the second vehicle ahead is greater than the predetermined deceleration threshold, the first deceleration strategy.

All the optional technical solutions mentioned above can be combined in any form to constitute optional embodiments of the present disclosure, which are not repeated in the embodiments disclosed herein.

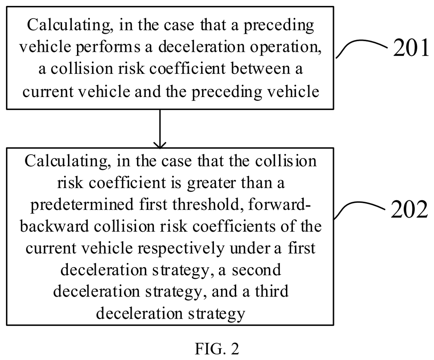

FIG. 2 is a flowchart of a method for preventing an entire vehicle collision for a vehicle according to some embodiments of the present disclosure. Referring to FIG. 2, the method includes the following processes.

In process 201, in the case that a preceding vehicle performs a deceleration operation, a collision risk coefficient between a current vehicle and the preceding vehicle is calculated.

It should be noted that the preceding vehicle is the nearest vehicle to the current vehicle in front of the current vehicle in a lane where the current vehicle is located. The current vehicle is a vehicle serving as an execution subject.

In some embodiments, the collision risk coefficient is a ratio of a time required by a driver and a brake system to take a collision avoidance measure to a vehicle collision time in the case that the preceding vehicle collides with the current vehicle based on the speed of the preceding vehicle relative to the current vehicle. In the case that the time required by the driver and the brake system to take the collision avoidance measure is longer than the vehicle collision time, the two vehicles collide. In addition, the longer the time required by the driver and the brake system to take the collision avoidance measure, the higher the collision risk coefficient and the greater the danger.

Specifically, in some embodiments, the entire vehicle calculates a collision risk coefficient T0 based on BEV perception; and in the case that T0 is less than or equal to a predetermined first threshold Ti, the entire vehicle performs a comfortable deceleration operation. The system calculates different decelerations based on different risk coefficients.

In the case that T0 is greater than the predetermined first threshold Ti, the forward-backward collision risk coefficients for performing comfortable avoidance, non-comfortable deceleration, and non-comfortable avoidance are respectively calculated as R1/R2, R3/R4, and R5/R6. That is, forward-backward collision risk coefficients under a first deceleration strategy, a second deceleration strategy, and a third deceleration strategy are respectively calculated.

T0 represents an entire vehicle collision risk coefficient; the higher the value, the greater the probability of a collision.

Ti represents a maximum collision risk coefficient with which a collision is able to be avoided via the comfortable deceleration.

In process 202, in the case that the collision risk coefficient is greater than a predetermined first threshold, forward-backward collision risk coefficients of the current vehicle respectively under the first deceleration strategy, the second deceleration strategy, and the third deceleration strategy are calculated, wherein a deceleration value of the first deceleration strategy is less than a deceleration value of the second deceleration strategy, and the deceleration value of the second deceleration strategy is less than a deceleration value of the third deceleration strategy.

In some embodiments, in the case that at least one of the forward-backward collision risk coefficients respectively corresponding to the first deceleration strategy, the second deceleration strategy, and the third deceleration strategy is less than or equal to a predetermined second threshold, a target deceleration strategy is determined in the priority order of the first deceleration strategy, the second deceleration strategy, and the third deceleration strategy.

In some embodiments, selecting a strategy executed by the current vehicle (i.e., determining the target deceleration strategy) in the priority order of the first deceleration strategy, the second deceleration strategy, and the third deceleration strategy, includes:
executing, by the current vehicle, in the case that the forward-backward collision risk coefficients respectively corresponding to the first deceleration strategy, the second deceleration strategy, and the third deceleration strategy are all less than the predetermined second threshold, the first deceleration strategy, i.e., determining the first deceleration strategy as the target deceleration strategy;
executing, by the current vehicle, in the case that a forward-backward collision risk coefficient corresponding to the first deceleration strategy is greater than the predetermined second threshold and forward-backward collision risk coefficients respectively corresponding to the second deceleration strategy and the third deceleration strategy are both less than or equal to the predetermined second threshold, the second deceleration strategy, i.e., determining the second deceleration strategy as the target deceleration strategy; and
executing, by the current vehicle, in the case that forward-backward collision risk coefficients respectively corresponding to the first deceleration strategy and the second deceleration strategy are greater than the predetermined second threshold and a forward-backward collision risk coefficient corresponding to the third deceleration strategy is less than or equal to the predetermined second threshold, the third deceleration strategy, i.e., determining the third deceleration strategy as the target deceleration strategy.

The first deceleration strategy, the second deceleration strategy, and the third deceleration strategy respectively correspond to a comfortable avoidance strategy, a non-comfortable deceleration strategy, and a non-comfortable avoidance strategy. The forward-backward collision risk coefficients of the comfortable avoidance strategy, the non-comfortable deceleration strategy, and the non-comfortable avoidance strategy are respectively calculated as R1/R2, R3/R4, and R5/R6. R1 represents an entire vehicle forward collision risk coefficient in the case that a comfortable leftward or rightward avoidance strategy is executed; R2 represents an entire vehicle backward collision risk coefficient in the case that a comfortable leftward or rightward avoidance strategy is executed; R3 represents an entire vehicle forward collision risk coefficient in the case that a non-comfortable deceleration (i.e., AEB deceleration) is performed; R4 represents an entire vehicle backward collision risk coefficient in the case that a non-comfortable deceleration (i.e., AEB deceleration) is performed; R5 represents an entire vehicle forward collision risk coefficient in the case that a non-comfortable leftward/rightward avoidance strategy is executed; and R6 represents an entire vehicle backward collision risk coefficient in the case that a non-comfortable leftward/rightward avoidance strategy is executed.

In some embodiments, the entire vehicle forward collision risk coefficient is a ratio of a time required by a driver and a brake system to take a collision avoidance measure to a vehicle collision time in the case that the preceding vehicle collides with the current vehicle based on the speed of the preceding vehicle relative to the current vehicle. In some embodiments, the entire vehicle backward collision risk coefficient is a ratio of a time required by the driver and the brake system to take a collision avoidance measure to a vehicle collision time in the case that the rear vehicle collides with the current vehicle based on the speed of the rear vehicle relative to the current vehicle. In some embodiments, the rear vehicle is the nearest vehicle, located behind the current vehicle in a lane where the current vehicle is located, to the current vehicle.

The forward-backward collision risk coefficients R1/R2, R3/R4, and R5/R6 of the comfortable avoidance strategy, the non-comfortable deceleration strategy, and the non-comfortable avoidance strategy are compared with the predetermined second threshold Ri. In the case that R1/R2, R3/R4, and R5/R6 are all less than Ri, it is determined that the collision can be avoided; otherwise, the collision cannot be avoided.

Specifically, the collision risk coefficient of the comfortable avoidance strategy refers to (that is, the forward-backward collision coefficient of the comfortable avoidance strategy integrally means) the probability value of a collision risk (that is, there is an intersection point between the driving trajectory and a surrounding vehicle) in the case that the lateral acceleration is less than the critical acceleration a1 for comfortable avoidance and non-comfortable avoidance.

The collision risk coefficient of the non-comfortable deceleration strategy refers to (that is, the forward-backward collision coefficient of the non-comfortable deceleration strategy integrally means) the probability value of a collision risk (that is, there is an intersection point between the driving trajectory and a surrounding vehicle) in the case that the longitudinal acceleration is greater than the deceleration critical value a3 for non-comfortable deceleration and comfortable deceleration, but less than the deceleration a4 allowed by the intelligent driving system.

The collision risk coefficient of the non-comfortable avoidance strategy refers to (that is, the forward-backward collision coefficient of the non-comfortable avoidance strategy integrally means) the probability value of a collision risk (that is, there is an intersection point between the driving trajectory and a surrounding vehicle) in the case that the lateral acceleration is greater than the critical acceleration a1 for comfortable avoidance and non-comfortable avoidance, but less than the acceleration a2 allowed by the intelligent driving system.

In the case that R1/R2, R3/R4, and R5/R6 are all greater than Ri, the non-comfortable deceleration strategy is executed.

In the case that at least one of R1/R2, R3/R4, and R5/R6 is less than or equal to Ri, a corresponding strategy is selected in the priority order of comfortable avoidance, non-comfortable deceleration, and non-comfortable avoidance.

R1/R2 represents a forward/backward entire vehicle collision risk coefficient in the case that a comfortable leftward or rightward avoidance strategy is executed.

R3/R4 represents an entire vehicle collision risk coefficient in the case that a non-comfortable deceleration (i.e., AEB deceleration) is performed.

R5/R6 represents an entire vehicle collision risk coefficient in the case that a non-comfortable leftward/rightward avoidance strategy is executed.

Ri represents a collision risk coefficient in the case that a collision cannot be avoided even in the case where all risk collision avoidance strategies are executed.

According to the present disclosure, the method further includes: determining, in the case that the preceding vehicle does not perform the deceleration operation, but the second vehicle ahead performs the deceleration operation, whether the deceleration of the second vehicle ahead is greater than a predetermined deceleration threshold; keeping, in the case that the deceleration of the second vehicle ahead is less than or equal to the predetermined deceleration threshold, the current vehicle in the current driving condition; and executing, by the current vehicle, in the case that the deceleration of the second vehicle ahead is greater than the predetermined deceleration threshold, the first deceleration strategy.

The second vehicle ahead is the nearest vehicle, located in front of the preceding vehicle of the current vehicle in a lane in which the preceding vehicle of the current vehicle is located, to the preceding vehicle of the current vehicle. The current vehicle is a vehicle serving as an execution subject.

In the case that the deceleration A of the second vehicle ahead is less than or equal to Ai, no relevant strategy is to be executed; and in the case that the deceleration A of the second vehicle ahead is greater than Ai, comfortable deceleration is performed.

A represents the deceleration of the second vehicle ahead.

Ai represents the deceleration threshold of the second vehicle ahead. In the case that the deceleration of the second vehicle ahead exceeds the threshold, a risk of an emergency brake for the own vehicle (i.e., the current vehicle) is likely produced due to a deceleration of the preceding vehicle in case of the preceding vehicle detecting a deceleration of the second vehicle ahead (second preceding vehicle).

It should be noted that all the above parameters and predetermined thresholds are determined by calibration in some embodiments.

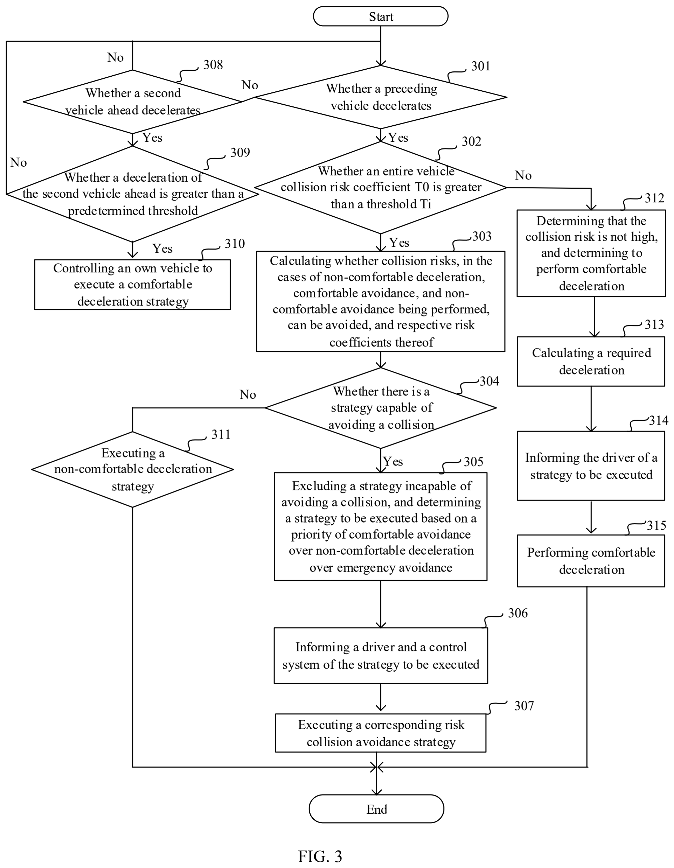

FIG. 3 shows a schematic flowchart of an anti-collision method. Referring to FIG. 3, the method includes: process 301, determining whether the preceding vehicle decelerates; process 302, determining, in the case that the preceding vehicle decelerates, whether an entire vehicle collision risk coefficient T0 is greater than a threshold Ti; process 303, calculating, in the case that the entire vehicle collision risk coefficient T0 is greater than the threshold Ti, whether collision risks, in the cases of non-comfortable deceleration, comfortable avoidance, and non-comfortable avoidance being performed, can be avoided, and respective risk coefficients thereof; process 304, determining whether there is a strategy capable of avoiding a collision (that is, whether there is a strategy whose corresponding forward-backward collision coefficient is less than or equal to the predetermined second threshold); process 305, excluding, in the case that there is a strategy capable of avoiding a collision, a strategy incapable of avoiding a risk (that is, excluding a strategy incapable of avoiding a collision), and determining a strategy to be executed based on the priority of comfortable avoidance over non-comfortable deceleration over emergency avoidance (that is, the priorities of comfortable avoidance, non-comfortable deceleration, and non-comfortable avoidance strategies are sequentially decreased); process 306, informing a driver and a control system of the strategy to be executed; process 307, executing a corresponding risk collision avoidance strategy (such as deceleration or lane change); process 308, determining, in the case that a determination result in process 301 is No, whether the second vehicle ahead decelerates; process 309, determining, in the case that the second vehicle ahead decelerates, whether the deceleration of the second vehicle ahead is greater than a predetermined threshold; process 310, controlling, in the case that a determination result in process 309 is Yes, the own vehicle (the current vehicle) to execute a comfortable deceleration strategy; process 311, executing, in the case that a determination result in process 304 is that there is no strategy capable of avoiding a collision, a non-comfortable deceleration strategy; process 312, determining, in the case that a determination result in process 302 is that the entire vehicle collision risk coefficient is less than or equal to the threshold Ti, that the collision risk is not high, and determining to perform comfortable deceleration; process 313, calculating a required deceleration; process 314, informing the driver of a strategy to be executed; and process 315, performing comfortable deceleration.

Upon explaining the method for preventing a collision for a vehicle according to the embodiments of the present disclosure, the following describes an apparatus for preventing a collision for a vehicle according to the embodiments of the present disclosure.

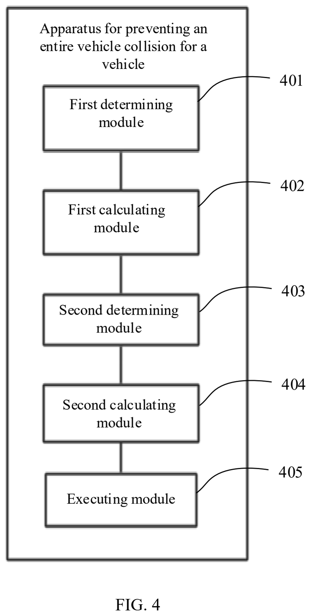

FIG. 4 is a schematic structural diagram of an apparatus for preventing a collision for a vehicle according to some embodiments of the present disclosure. The apparatus for preventing a collision for a vehicle is implemented as part or all of a vehicle by software, hardware, or a combination thereof. Referring to FIG. 4, the apparatus includes a first determining module 401, a first calculating module 402, a second determining module 403, a second calculating module 404, and an executing module 405.

The first determining module 401 is configured to determine whether a preceding vehicle performs a deceleration operation.

The first calculating module 402 is configured to calculate, in the case that the preceding vehicle performs the deceleration operation, a collision risk coefficient between the current vehicle and the preceding vehicle.

The second determining module 403 is configured to determine whether the collision risk coefficient is greater than a predetermined first threshold.

The second calculating module 404 is configured to calculate, in the case that the collision risk coefficient is greater than the predetermined first threshold, forward-backward collision risk coefficients of the current vehicle respectively under a first deceleration strategy, a second deceleration strategy, and a third deceleration strategy, wherein a deceleration value of the first deceleration strategy is less than a deceleration value of the second deceleration strategy, and the deceleration value of the second deceleration strategy is less than a deceleration value of the third deceleration strategy.

The executing module 405 is configured to compare the forward-backward collision risk coefficients with a predetermined second threshold, and execute, by the current vehicle, a corresponding deceleration strategy based on a comparison result.

In some embodiments, the executing module includes:
a first executing submodule, configured to execute, by the current vehicle, in the case that the forward-backward collision risk coefficients respectively corresponding to the first deceleration strategy, the second deceleration strategy, and the third deceleration strategy are all greater than the predetermined second threshold, the third deceleration strategy.

In some embodiments, the executing module further includes:
a second executing submodule, configured to select, in the case that at least one coefficient of the forward-backward collision risk coefficients respectively corresponding to the first deceleration strategy, the second deceleration strategy, and the third deceleration strategy is less than or equal to the predetermined second threshold, a strategy executed by the current vehicle in the priority order of the first deceleration strategy, the second deceleration strategy, and the third deceleration strategy.

In some embodiments, the second executing submodule includes:
a first submodule, configured to execute, by the current vehicle, in the case that the forward-backward collision risk coefficients respectively corresponding to the first deceleration strategy, the second deceleration strategy, and the third deceleration strategy are all less than the predetermined second threshold, the first deceleration strategy.

In some embodiments, the second executing submodule further includes:
a second submodule, configured to execute, by the current vehicle, in the case that a forward-backward collision risk coefficient corresponding to the first deceleration strategy is greater than the predetermined second threshold and forward-backward collision risk coefficients respectively corresponding to the second deceleration strategy and the third deceleration strategy are both less than or equal to the predetermined second threshold, the second deceleration strategy.

In some embodiments, the second executing submodule further includes:
a third submodule, configured to execute, by the current vehicle, in the case that forward-backward collision risk coefficients respectively corresponding to the first deceleration strategy and the second deceleration strategy are greater than the predetermined second threshold and a forward-backward collision risk coefficient corresponding to the third deceleration strategy is less than or equal to the predetermined second threshold, the third deceleration strategy.

In some embodiments, the apparatus further includes a third determining module. The third determining module is configured to determine, in the case that the preceding vehicle does not perform the deceleration operation, but the second vehicle ahead performs the deceleration operation, whether the deceleration of the second vehicle ahead is greater than a predetermined deceleration threshold; keep, in the case that the deceleration of the second vehicle ahead is less than or equal to the predetermined deceleration threshold, the current vehicle in the current driving condition; and execute, by the current vehicle, in the case that the deceleration of the second vehicle ahead is greater than the predetermined deceleration threshold, the first deceleration strategy.

It should be noted that the apparatus for preventing a collision for a vehicle according to the above embodiments is merely illustrated by taking the above functional module division as an example to control the vehicle to prevent a collision. In practical applications, the functions described above are assigned to different functional modules as needed in some embodiments, that is, the internal structure of the apparatus is divided into different functional modules, so as to achieve all or part of the above-described functions. In addition, the apparatus for preventing a collision for a vehicle and the method for preventing a collision for a vehicle according to the above embodiments share the same concept, and specific implementation processes thereof are described in the method embodiments in detail and are not repeated herein.

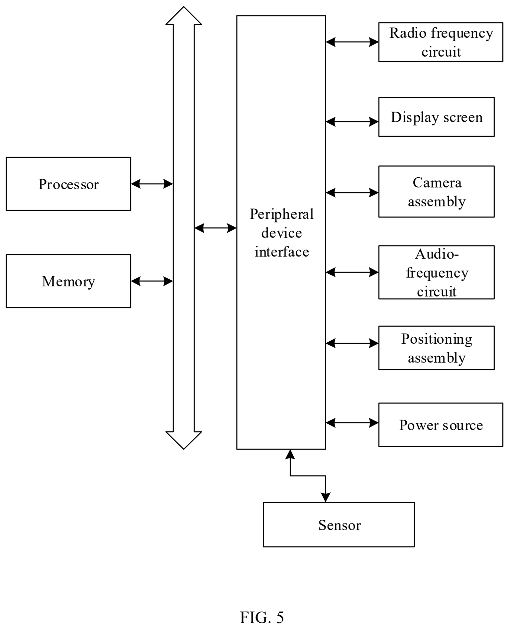

FIG. 5 is a structural block diagram of a vehicle according to some embodiments of the present disclosure. Generally, the vehicle includes one or more processors and a memory.

The processor includes one or more processing cores, such as a 4-core processor and an 8-core processor. In some embodiments, the processor is implemented in at least one hardware form of a digital signal processor (DSP), a field-programmable gate array (FPGA), and a programmable logic array (PLA). In some embodiments, the processor includes a main processor and a coprocessor. The main processor is a processor configured to process data in an awake state, and is also referred to as a central processing unit (CPU). The coprocessor is a low-power processor configured to process data in a standby state. In some embodiments, the processor is integrated with a graphics processing unit (GPU) responsible for rendering and drawing contents that need to be displayed on a display screen. In some embodiments, the processor further includes an artificial intelligence (AI) processor for processing computing operations related to machine learning.

In some embodiments, the memory includes one or more computer-readable storage media, which are non-transitory in some embodiments. In some embodiments, the memory further includes a high-speed random-access memory, and a non-transitory memory, such as one or more magnetic disk storage devices and flash storage devices. In some embodiments, the non-transitory computer-readable storage medium in the memory is configured to store one or more instructions. The one or more instructions are configured to, when executed by the processor, cause the processor to perform the method for preventing a collision for a vehicle according to the method embodiments of the present disclosure.

In some embodiments, the vehicle further includes: a peripheral device interface and at least one peripheral device. In some embodiments, the processor, the memory, and the peripheral device interface are connected via a bus or a signal line. The peripheral devices are connected to the peripheral device interface via a bus, signal line, or circuit board. Specifically, in some embodiments, the peripheral device includes at least one of a radio frequency circuit, a touch display screen, a camera, an audio-frequency circuit, a positioning assembly, or a power source.

In some embodiments, the peripheral device interface is configured to connect at least one peripheral device related to input/output (I/O) to the processor and the memory. In some embodiments, the processor, the memory, and the peripheral device interface are integrated on the same chip or circuit board. In some other embodiments, any one or two of the processor, the memory, and the peripheral device interface are implemented on a separate chip or circuit board, which is not limited in the embodiments.

The radio frequency circuit is configured to receive and transmit a radio frequency (RF) signal, which is also referred to as an electromagnetic signal. The radio frequency circuit communicates with a communication network and other communication devices via electromagnetic signals. The radio frequency circuit converts an electrical signal into an electromagnetic signal for transmission, or converts a received electromagnetic signal into an electrical signal. In some embodiments, the radio frequency circuit includes an antenna system, an RF transceiver, one or more amplifiers, a tuner, an oscillator, a digital signal processor, a codec chip set, a subscriber identity module card, and the like. The radio frequency circuit communicates with other terminals via at least one wireless communication protocol. The wireless communication protocol includes, but is not limited to, the World Wide Web, a metropolitan area network, an intranet, generations of mobile communication networks (2G, 3G, 4G, and 5G), a wireless local area network and/or a wireless fidelity (Wi-Fi) network. In some embodiments, the radio frequency circuit further includes a near field communication (NFC) related circuit, which is not limited in the present disclosure.

The display screen is configured to display a user interface (UI). In some embodiments, the UI includes graphics, text, icons, videos, or any combination thereof. In the case that the display screen is a touch display screen, the display screen further has the capacity to acquire a touch signal on or above the surface of the display screen. In some embodiments, the touch signal is input to the processor as a control signal for processing. In this case, the display screen is further configured to provide virtual buttons and/or virtual keyboards, which are also referred to as soft buttons and/or soft keyboards. In some embodiments, there is one display screen disposed on a front panel of the vehicle. In some other embodiments, there are at least two display screens respectively disposed on different surfaces of the vehicle, or in a folded design. In yet some other embodiments, the display screen is a flexible display screen disposed on a curved surface or a folded surface of the vehicle. In some embodiments, the display screen is even configured as in a non-rectangular irregular shape, that is, a special-shaped screen. In some embodiments, the display screen is manufactured by using a material such as a liquid crystal display (LCD) or an organic light-emitting diode (OLED).

The camera assembly is configured to acquire images or videos. In some embodiments, the camera assembly includes any one of a primary camera, a depth camera, a wide-angle camera, and a telephoto camera, such that the primary camera and the depth camera are combined to achieve a bokeh function, the primary camera and the wide-angle camera are combined to achieve panoramic shooting functions, virtual reality (VR) shooting functions, or other combined shooting functions. In some embodiments, the camera assembly further includes a flash. The flash is a single-color temperature flash or a two-color temperature flash. The two-color temperature flash is a combination of a warm-light flash and a cold-light flash, and is employed for light compensation at different color temperatures.

In some embodiments, the audio-frequency circuit includes a microphone and a speaker. The microphone is configured to acquire sound waves of the user and the environment, and convert the sound waves into electrical signals for input into the processor for processing, or into the radio frequency circuit for voice communication. For the purpose of stereo acquisition or noise reduction, there are a plurality of microphones respectively disposed at different parts of the vehicle in some embodiments. In some embodiments, the microphone is an array microphone or an omnidirectional acquisition microphone. The speaker is configured to convert the electrical signal from the processor or the radio frequency circuit into sound waves. In some embodiment, the speaker is a conventional film speaker or a piezoelectric ceramic speaker. In the case that the speaker is a piezoelectric ceramic speaker, not only can the electrical signal be converted into sound waves that are audible to humans, but also the electrical signal can be converted into sound waves that are inaudible to humans for ranging and the like. In some embodiments, the audio-frequency circuit further includes a headphone jack.

The positioning assembly is configured to position the current geographic location of the vehicle for achieve navigation or a location-based service (LBS). The positioning assembly is based on the United States' Global Positioning System (GPS), China's BeiDou Navigation Satellite System, or Russia's Galileo Satellite Navigation System.

The power source is configured to supply power to the components in the vehicle. In some embodiments, the power source is an alternating current power supply, a direct current power supply, a disposable battery, or a rechargeable battery. In the case that the power source includes a rechargeable battery, the rechargeable battery is a wired rechargeable battery or a wireless rechargeable battery. The wired rechargeable battery is a battery charged by a wired line, and the wireless rechargeable battery is a battery charged by a wireless coil. In some embodiments, the rechargeable battery is further configured to support fast charging.

In some embodiments, the vehicle further includes one or more sensors.

Those skilled in the art would understand that the structures illustrated above do not constitute a limitation on the vehicle, and that more or fewer components than those illustrated are included in some embodiments, or some of the components are combined, or a different arrangement of components is employed in some embodiments.

In some embodiments, a computer-readable storage medium is further provided. The storage medium stores one or more computer programs, and the one or more computer programs, when run by a processor, cause the processor to perform the method for preventing a collision for a vehicle in the above embodiments. In some embodiments, the computer-readable storage medium is a ROM, a RAM, a CD-ROM, a magnetic tape, a soft disk, an optical data storage device, or the like.

It is noted that the computer-readable storage medium mentioned in the present disclosure is a non-volatile storage medium, that is, a non-transitory storage medium.

It should be understood that all or part of the processes of the above embodiments are achieved by software, hardware, firmware, or any combination thereof. In the case of implementation with software, the processes are fully or partially implemented in the form of a computer program product. The computer program product includes one or more computer instructions. The computer instructions are stored in the above computer-readable storage medium in some embodiments.

That is, in some embodiments, a computer program product including one or more instructions is further provided. The one or more instructions, when executed on a computer, cause the computer to perform the processes of the method for preventing a collision for a vehicle described above.

Described above are the embodiments of the present disclosure and are not intended to limit the present disclosure. Any modifications, equivalents, improvements, and the like, made within the concept and principle of the present disclosure should fall within the protection scope of the present disclosure.

## Claims

1. A method for preventing an entire vehicle collision for a vehicle, comprising:
determining whether a preceding vehicle of a current vehicle performs a deceleration operation;
calculating, in a case that the preceding vehicle performs the deceleration operation, a collision risk coefficient between the current vehicle and the preceding vehicle;
determining whether the collision risk coefficient is greater than a predetermined first threshold;
calculating, in a case that the collision risk coefficient is greater than the predetermined first threshold, forward-backward collision risk coefficients of the current vehicle respectively under a first deceleration strategy, a second deceleration strategy, and a third deceleration strategy, wherein a deceleration value of the first deceleration strategy is less than a deceleration value of the second deceleration strategy, and the deceleration value of the second deceleration strategy is less than a deceleration value of the third deceleration strategy; and
comparing the forward-backward collision risk coefficients with a predetermined second threshold, determining a target deceleration strategy based on a comparison result, and controlling the current vehicle to execute the target deceleration strategy, wherein the target deceleration strategy is one of the first deceleration strategy, the second deceleration strategy, and the third deceleration strategy.

2. The method according to claim 1, wherein comparing the forward-backward collision risk coefficients with the predetermined second threshold and determining the target deceleration strategy based on the comparison result comprises:
determining, in a case that the forward-backward collision risk coefficients respectively corresponding to the first deceleration strategy, the second deceleration strategy, and the third deceleration strategy are all greater than the predetermined second threshold, the third deceleration strategy as the target deceleration strategy.

3. The method according to claim 1, wherein comparing the forward-backward collision risk coefficients with the predetermined second threshold and determining the target deceleration strategy based on the comparison result comprises:
determining, in a case that at least one of the forward-backward collision risk coefficients respectively corresponding to the first deceleration strategy, the second deceleration strategy, and the third deceleration strategy is less than or equal to the predetermined second threshold, the target deceleration strategy in a priority order of the first deceleration strategy, the second deceleration strategy, and the third deceleration strategy.

4. The method according to claim 3, wherein determining the target deceleration strategy in the priority order of the first deceleration strategy, the second deceleration strategy, and the third deceleration strategy comprises:
determining, in a case that the forward-backward collision risk coefficients respectively corresponding to the first deceleration strategy, the second deceleration strategy, and the third deceleration strategy are all less than the predetermined second threshold, the first deceleration strategy as the target deceleration strategy.

5. The method according to claim 3, wherein determining the target deceleration strategy in the priority order of the first deceleration strategy, the second deceleration strategy, and the third deceleration strategy further comprises:
determining, in a case that a forward-backward collision risk coefficient corresponding to the first deceleration strategy is greater than the predetermined second threshold and forward-backward collision risk coefficients respectively corresponding to the second deceleration strategy and the third deceleration strategy are less than or equal to the predetermined second threshold, the second deceleration strategy as the target deceleration strategy.

6. The method according to claim 3, wherein determining the target deceleration strategy in the priority order of the first deceleration strategy, the second deceleration strategy, and the third deceleration strategy further comprises:
determining, in a case that forward-backward collision risk coefficients respectively corresponding to the first deceleration strategy and the second deceleration strategy are greater than the predetermined second threshold and a forward-backward collision risk coefficient corresponding to the third deceleration strategy is less than or equal to the predetermined second threshold, the third deceleration strategy as the target deceleration strategy.

7. The method according to claim 1, further comprising: determining, in a case that the preceding vehicle does not perform the deceleration operation, but a second vehicle ahead performs the deceleration operation, whether a deceleration of the second vehicle ahead is greater than a predetermined deceleration threshold; keeping, in a case that the deceleration of the second vehicle ahead is less than or equal to the predetermined deceleration threshold, the current vehicle in a current driving condition; and executing, by the current vehicle, in a case that the deceleration of the second vehicle ahead is greater than the predetermined deceleration threshold, the first deceleration strategy.

8. An apparatus for preventing an entire vehicle collision for a vehicle, comprising:
a first determining module, configured to determine whether a preceding vehicle of a current vehicle performs a deceleration operation;
a second calculating module, configured to calculate, in a case that the preceding vehicle performs the deceleration operation, a collision risk coefficient between the current vehicle and the preceding vehicle;
a second determining module, configured to determine whether the collision risk coefficient is greater than a predetermined first threshold;
a second calculating module, configured to calculate, in a case that the collision risk coefficient is greater than the predetermined first threshold, forward-backward collision risk coefficients of the current vehicle respectively under a first deceleration strategy, a second deceleration strategy, and a third deceleration strategy, wherein a deceleration value of the first deceleration strategy is less than a deceleration value of the second deceleration strategy, and the deceleration value of the second deceleration strategy is less than a deceleration value of the third deceleration strategy; and
an executing module, configured to compare the forward-backward collision risk coefficients with a predetermined second threshold, determine a target deceleration strategy based on a comparison result, and control the current vehicle to execute the target deceleration strategy, wherein the target deceleration strategy is one of the first deceleration strategy, the second deceleration strategy, and the third deceleration strategy.

9. A vehicle, comprising a memory and one or more processors, wherein the memory is configured to store one or more computer programs, and the one or more processors are configured to execute the one or more computer programs stored in the memory to perform the processes of the method for preventing an entire vehicle collision for a vehicle as defined in any one of claims 1 to 7.

10. A computer-readable storage medium, wherein the storage medium stores one or more computer programs, wherein the one or more computer programs, when run by one or more processors, cause the one or more processors to perform the processes of the method for preventing an entire vehicle collision for a vehicle as defined in any one of claims 1 to 7.
